# EUROPÄISCHE PATENTSCHRIFT

(11) **EP 2 125 628 B1**
(45) Veröffentlichungstag und Bekanntmachung des Hinweises auf die Patenterteilung: **18.01.2017**
(21) Anmeldenummer: 08716063.6
(22) Anmeldetag: 27.02.2008
(51) Int. Cl.: C02F 1/42

(54) **VORRICHTUNG ZUR ENTHÄRTUNG VON ROHWASSER**
DEVICE FOR SOFTENING UNTREATED WATER
DISPOSITIF D'ADOUCISSEMENT D'EAU BRUTE

(30) Priorität: 02.03.2007 DE 102007010641
(43) Veröffentlichungstag der Anmeldung: 02.12.2009
(73) Patentinhaber: BWT Wassertechnik GmbH, 69198 Schriesheim (DE)
(72) Erfinder: BERGMANN, Ralph, 69469 Weinheim (DE); MENTROP, Rainer, 67071 Ludwigshafen (DE)
(74) Vertreter: Reiser & Partner
(86) Internationale Anmeldenummer: PCT/EP2008/001527
(87) Internationale Veröffentlichungsnummer: WO 2008/107098

(56) Entgegenhaltungen:
- EP-A- 1 174 393
- WO-A-94/13379
- DE-A1- 10 350 884
- JP-A- 8 309 345
- JP-A- 9 248 569
- US-A- 5 273 070
- US-A- 5 300 230
- US-A1- 2002 195 403

## Beschreibung

Die Erfindung betrifft eine Vorrichtung zur Enthärtung von Rohwasser, umfassend mindestens eine erste und eine zweite Enthärtersäule, welche ein sich erschöpfendes und regenerierbares Wasserbehandlungsmittel enthalten, eine Zuleitung zur Einleitung von Rohwasser in die Enthärtersäulen und eine Ableitung zur Ableitung von Weichwasser aus den Enthärtersäulen, wobei abwechselnd eine Enthärtersäule mit der Zuleitung über Stellmittel verbindbar ist, während die andere Enthärtersäule von der Zuleitung durch die Stellmittel abkoppelbar ist. Die Erfindung betrifft darüber hinaus ein entsprechendes Verfahren zur Enthärtung von Rohwasser.

Vorrichtungen der genannten Art finden insbesondere Anwendung in der Haustechnik und in technischen Prozessen, um aus hartem Rohwasser Weichwasser zu erzeugen.

Das zu enthärtende Rohwasser fließt durch eine in Betrieb befindliche Enthärtersäule. Dabei werden Kalzium- und Magnesiumionen, welche die Härte verursachen, gegen Natriumionen ausgetauscht. Das hierbei entstehende Weichwasser kann durch ein Mehrwege-Steuerventil zu einem Verschneideventil verbracht werden, wo es durch Zugabe von Rohwasser auf eine gewünschte Verschnittwasserhärte gebracht werden kann.

Im Falle des Trinkwassers werden die darin enthaltenen Kalzium- und Magnesiumionen gegen Natriumionen ausgetauscht, um Kalkausfällungen zu minimieren.

Um den Austausch von Kalzium- und Magnesiumionen gegen Natriumionen zu bewirken, werden Wasserbehandlungsmittel eingesetzt. Diese Wasserbehandlungsmittel weisen nach einer bestimmten Betriebsdauer einen gewissen Erschöpfungsgrad auf und bedürfen der Regeneration.

Üblicherweise werden als Wasserbehandlungsmittel Ionenaustauscher verwendet, die mittels einer konzentrierten Kochsalzlösung regeneriert werden.

Während der Regeneration steht das Wasserbehandlungsmittel für die Regenerationszeit nicht mehr zur Verfügung.

Um den Verbraucher auch während der Regenerationszeit mit Weichwasser zu versorgen, sind bereits sogenannte Duplexanlagen vorgeschlagen worden, die zwei Enthärtersäulen aufweisen. Diese können über drei verschiedene Arten betrieben werden. Eine erste Betriebsweise sieht vor, dass das Rohwasser über eine Enthärtersäule geführt wird, bis diese nahezu erschöpft ist. Erst dann erfolgt die Umschaltung auf die zweite Enthärtersäule. Sobald die zweite Enthärtersäule in Betrieb genommen wird, beginnt die Regeneration der ersten Enthärtersäule. Wenn die zweite Enthärtersäule nahezu völlig erschöpft ist, wird diese regeneriert und die erste Enthärtersäule geht in den Betriebsmodus. Bei diesem wechselseitigen Betrieb hat das Rohwasser stets nur mit einer Enthärtersäule Kontakt.

Eine weitere Betriebsweise sieht vor, dass das Rohwasser nacheinander über zwei Enthärtersäulen geführt wird. Sobald die in Fließrichtung erste Enthärtersäule nahezu erschöpft ist, wird deren Regeneration eingeleitet. Während der Regeneration der ersten Enthärtersäule wird das Wasser nur noch über die in Fließrichtung zweite Enthärtersäule geführt. Bei dieser so genannten seriellen Betriebsweise hat das Rohwasser mit zwei Enthärtersäulen Kontakt, sofern nicht eine der Enthärtersäulen gerade regeneriert wird.

Eine dritte Betriebsweise sieht vor, dass das Rohwasser parallel und gleichzeitig durch zwei Enthärtersäulen geführt wird. Sobald eine der Enthärtersäulen der Regeneration bedarf, führt die andere Enthärtersäule den Betrieb alleine weiter.

Die bekannten Betriebsweisen gewährleisten eine ständige Versorgung des Verbrauchers mit Weichwasser.

Die US-A-5273070 offenbart eine Vorrichtung zur Enthärtung von Wasser mit zwei parallel geschalteten Enthärtersäulen, die Ionentauscherharz enthalten. Eine Regeneration von Enthärtersäulen erfolgt in Abhängigkeit von abgelaufenen Zeiten oder Enthärtungsgraden.

Bei der Verwendung der genannten Vorrichtungen gerade im Haushaltsbereich kann es zu Perioden mit hohem Durchfluss und zu Perioden längerer Stagnation kommen.

Der längere Stillstand des Wassers kann zu einem Aufkeimungsprozess führen, dessen Ursache Bakterien sind, die über das Trinkwasser auf das Wasserbehandlungsmittel aufgebracht werden. Diese Bakterien besiedeln das Wasserbehandlungsmittel und werden an das aufbereitete Weichwasser abgegeben. Während der Stagnation vermehren sich bereits angesiedelte Bakterien verstärkt. Des Weiteren kann es zu dem in der Fachliteratur als "Leaching" beschriebenen Prozess kommen. Bei diesem Prozess werden organische Substanzen aus dem Wasserbehandlungsmittel an das Weichwasser abgegeben. Schließlich kann während der Stagnation der sogenannte Gegenioneneffekt auftreten. Dabei werden bereits am Wasserbehandlungsmittel - nämlich einem Ionenaustauscher - gebundene Kalzium- und Magnesiumionen wieder an das Weichwasser abgegeben.

Bei den bekannten Betriebsweisen kann es zu den genannten unerwünschten Prozessen wie Aufkeimung, Leaching und Gegenioneneffekt kommen.

Der Erfindung liegt daher die Aufgabe zugrunde, eine Vorrichtung der eingangs genannten Art derart auszugestalten und weiterzubilden, dass eine Verschlechterung der Qualität des Weichwassers reduziert oder vermieden wird.

Erfindungsgemäß wird die vorstehende Aufgabe mit den Merkmalen des Patentanspruchs 1 bzw. 11 gelöst.

Danach umfassen die Vorrichtung und das Verfahren zur Enthärtung von Wasser der eingangs genannten Art eine Steuerung, welche den Erschöpfungsgrad des Wasserbehandlungsmittels in jeder Enthärtersäule erfasst und die Zuleitung in Abhängigkeit vom Erschöpfungsgrad entweder mit der ersten oder mit der zweiten Enthärtersäule derart verbindet, dass die Wasserbehandlungsmittel abwechselnd allmählich erschöpft werden. Die vorliegende Erfindung ermöglicht, eine alternierende Betriebsweise der Wasserenthärtung, bei welcher die beiden Enthärtersäulen wechselseitig und vorzugsweise gleichmäßig erschöpft werden. Durch die gleichmäßige und allmähliche Erschöpfung des Wasserbehandlungsmittels werden lange Verweildauern des Wassers in den Enthärtersäulen vermieden. Die Steuerung sieht vor, dass die beiden Enthärtersäulen abwechselnd von zu behandelndem Wasser durchflossen werden. Die Steuerung wartet in erfindungsgemäßer Weise nicht ab, bis das Wasserbehandlungsmittel einer Enthärtersäule vollständig erschöpft ist, sondern leitet einen Enthärtersäulenwechsel schon früher ein, sofern es der Erschöpfungsgrad der Enthärtersäulen zulässt. Insoweit ist erfindungsgemäß realisiert, dass die Verweildauer von Wasser in einer Enthärtersäule erheblich reduziert wird und somit die durch Stagnation auftretenden Prozesse vermindert werden. Folglich ist die genannte Aufgabe gelöst.

Die Steuerung weist ausschließlich einen Durchflussmesser zur Erfassung Von Durchflussmengen (z.B. V_{H2O} oder V_{H2Ogesamt}) an Rohwasser auf. Die Vorkehrung ausschließlich eines Durchflussmessers erlaubt einen konstruktiv einfachen Aufbau der Vorrichtung. Insoweit können die Fehleranfälligkeit und die Herstellkosten der Vorrichtung deutlich reduziert werden.

Die Steuerung weist mindestens eine Zeiterfassungseinrichtung auf. Die Kombination einer Zeiterfassungseinrichtung mit einem Durchflussmesser erlaubt es unter anderem, Durchflussmengen zeitabhängig zu erfassen. Damit können auch Durchflussraten ermittelt werden.

Die Zeiterfassungseinrichtung misst eine Zeit tv bis zum Ablauf eines ersten vorgebbaren Zeitintervalls t₁, wobei die Messung durch eine Durchflussmenge V_{H2O} durch die mit der Zuleitung verbundene Enthärtersäule aktiviert wird. Diese konkrete Ausgestaltung erlaubt es, einen Enthärtersäulenwechsel, also ein Umschalten auf die andere Enthärtersäule, nach Ablauf des ersten vorgebbaren Zeitintervalls t₁ einzuleiten.

Die Zeiterfassungseinrichtung könnte durch eine Durchflussmenge V_{H2O} aktiviert werden, die größer oder gleich dem Volumen Vs der Enthärtersäule ist. Mit dem Volumen Vs soll dabei die in einer Enthärtersäule aufgenommene Menge an Wasser bezeichnet werden. Die Wahl dieses Volumens als Startvolumen erlaubt es, erst dann auf die andere Enthärtersäule umzuschalten, wenn der Wasserinhalt der einen Enthärtersäule wenigstens einmal vollständig ausgetauscht wurde.

Die Steuerung könnte die gesamten Durchflussmengen V_{H2Ogesamt} an Rohwasser für jede der beiden Enthärtersäulen erfassen, die seit der letzten Regeneration der jeweiligen Enthärtersäule durch diese geflossen sind. Diese konkrete Ausgestaltung erlaubt es, den Erschöpfungsgrad jeder der Enthärtersäulen bzw. des Wasserbehandlungsmittels rechnerisch zu erfassen. Soweit die gesamte seit der letzten Regeneration durch eine Enthärtersäule geflossene Durchflussmenge V_{H2Ogesamt} bekannt ist, kann darauf rückgeschlossen werden, in welchem Maße das in der Enthärtersäule befindliche Wasserbehandlungsmittel verbraucht ist.

Die Steuerung könnte die maximale Durchflussrate qₘₐₓ an Rohwasser durch beide Enthärtersäulen innerhalb eines zweiten vorgebbaren Zeitintervalls erfassen. Diese konkrete Ausgestaltung erlaubt es die maximale Durchflussrate durch die Vorrichtung zu ermitteln. Beispielsweise ist denkbar, die maximale Durchflussrate während eines Tages zu erfassen. Die Kenntnis der Durchflussrate ermöglicht es, hierauf aufbauend die Einleitung einer Regenerationsphase in Abhängigkeit von der künftig vermuteten Intensität der Benutzung der Vorrichtung einzustellen.

Die Steuerung könnte als Maß für den Erschöpfungsgrad des Wasserbehandlungsmittels ein Restkapazitätsvolumen V_{RK} ermitteln. Dieses könnte durch Subtraktion der gesamten seit deren letzter Regeneration durch eine Enthärtersäule geflossenen Durchflussmenge V_{H2Ogesamt} von einem vorgebbaren Kapazitätsvolumen V_{K} der Enthärtersäule erhalten werden. Diese konkrete Ausgestaltung erlaubt es, den Erschöpfungsgrad allein unter Verwendung eines Durchflussmessers und einer Zeiterfassungseinrichtung zu ermitteln. Unter dem Kapazitätsvolumen V_{K} versteht man eine Rohwassermenge, die durch eine Enthärtersäule fließen darf, um einen Härtegrad des entstehenden Weichwassers sicher zu stellen. Wenn der Wert für das Kapazitätsvolumen V_{K} automatisch oder manuell einstellbar ist, kann die Vorrichtung leicht an unterschiedliche Wasserhärten und Wasserqualitäten angepasst werden.

Die Steuerung koppelt nach Ablauf des ersten vorgebbaren Zeitintervalls t₁ die Zuleitung von einer Enthärtersäule ab und verbindet sie mit der anderen, sofern das Restkapazitätsvolumen V_{RK} größer oder gleich einem Enthärtersäulenwechselvolumen Vsw ist. Durch diese konkrete Ausgestaltung ist sichergestellt, dass die momentan in Betrieb befindliche Enthärtersäule abgekoppelt werden kann und zu einem späteren Zeitpunkt noch ein ausreichendes Restkapazitätsvolumen V_{RK} aufweist, um für eine ausreichende Zeitspanne Weichwasser zur Verfügung zu stellen. Das Enthärtersäulenwechselvolumen Vsw kann vorgegeben sein oder von der Steuerung ermittelt bzw. angepasst werden.

Die Steuerung könnte das Enthärtersäulenwechselvolumen Vsw aus dem Produkt einer Regenerationszeit t_{Reg} für das Wasserbehandlungsmittel einer Enthärtersäule und der maximalen Durchflussrate qₘₐₓ ermitteln. Diese konkrete Ausgestaltung stimmt die Einleitung der Regeneration auf den Wasserverbrauch ab.

Die Steuerung könnte die Zuleitung von einer ersten Enthärtersäule abkoppeln und mit der zweiten verbinden, wenn das Restkapazitätsvolumen V_{RK} gleich null ist. Durch diese Ausgestaltung ist sichergestellt, dass ein Enthärtersäulenwechsel dann stattfindet, wenn die durchströmte Enthärtersäule völlig erschöpft ist, also maximalen Erschöpfungsgrad aufweist, und der Regeneration bedarf.

Vor diesem Hintergrund könnte die Steuerung die Regeneration des Wasserbehandlungsmittels der ersten Enthärtersäule einleiten, wenn deren Restkapazitätsvolumen V_{RK} gleich null ist. In diesem Fall kann davon ausgegangen werden, dass das Wasserbehandlungsmittel derart erschöpft ist, dass kein für die Enthärtung ausreichender Ionenaustausch mehr stattfinden kann und eine Zwangsregeneration erforderlich ist.

Die Steuerung könnte die Zuleitung mit der ersten Enthärtersäule verbinden, wenn deren Regeneration abgeschlossen ist. Hierdurch ist sichergestellt, dass Kochsalzlösung, welche während der Regeneration verwendet wird, nicht in den Weichwasserkreislauf geführt wird.

In der Zuleitung könnte ein Rückflussverhinderer eingebaut sein. Hierdurch wird ein Rückfluß verhindert, wenn zu dem öffentlichen Wasserversorgungsnetz ein Unterdruck auftritt.

In der Ableitung könnte ein Resthärteregelventil angeordnet sein. Hierdurch kann das behandelte Weichwasser mit unbehandeltem Wasser auf eine gewünschte Härte verschnitten werden.

Die Enthärtersäulen könnten als Wasserbehandlungsmittel ein Ionenaustauscherharz umfassen. Ionenaustauscherharze lassen sich problemlos durch eine Kochsalzlösung regenerieren.

Das Ionenaustauscherharz könnte kugelförmige Partikel mit einem mittleren Durchmesser von 0,5 bis 2 mm aufweisen. Diese Körnung hat sich als vorteilhaft erwiesen, um eine große Oberfläche für den Ionenaustausch zur Verfügung zu stellen.

Die zuvor im Zusammenhang mit der erfindungsgemäßen Vorrichtung beschriebenen Merkmale können entsprechend bei dem erfindungsgemäßen Verfahren verwirklicht sein.

Weitere Ziele, Merkmale, Vorteile und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In der Zeichnung zeigen
- Fig. 1: eine schematische Darstellung der erfindungsgemäßen Vorrichtung,
- Fig. 2: ein Diagramm für ein Verfahren, das mit der erfindungsgemäßen Vorrichtung durchführbar ist, und
- Fig. 3: eine Tabelle, in welcher als Beispiel einzelne Betriebsparameter der erfindungsgemäßen Vorrichtung während eines alternierenden Betriebs dargestellt sind.

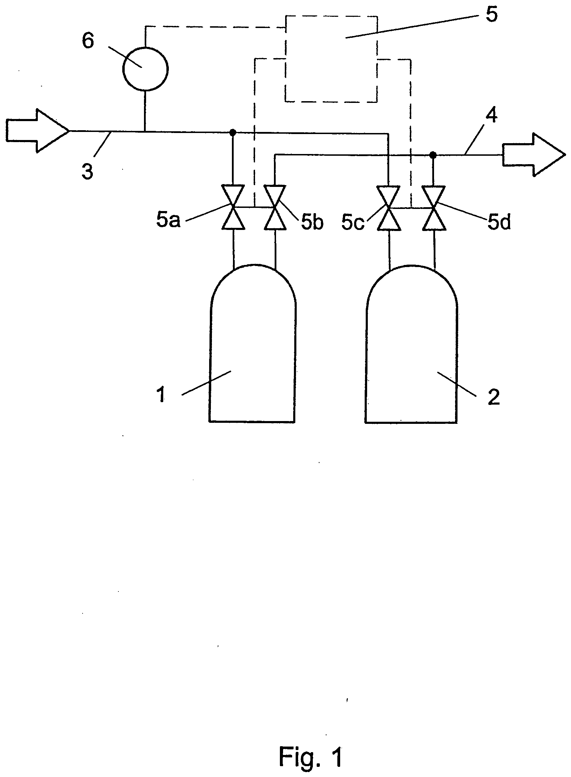

Fig. 1 zeigt eine Vorrichtung zur Enthärtung von Rohwasser, umfassend eine erste Enthärtersäule 1 und eine zweite Enthärtersäule 2. Die Enthärtersäulen 1 und 2 enthalten jede ein sich erschöpfendes und regenerierbares Wasserbehandlungsmittel. Das Wasserbehandlungsmittel ist als Ionenaustauscherharz ausgebildet, welches kugelförmige Partikel mit einem mittleren Durchmesser von z. B. 1 mm aufweist. Die Vorrichtung weist eine Zuleitung 3 auf, durch welche Rohwasser aus einem öffentlichen Wasserversorgungsnetz in die Enthärtersäulen 1 und 2 einleitbar ist. Durch eine Ableitung 4 kann Weichwasser aus den Enthärtersäulen 1 und 2 abgeführt werden. Mittels der Stellmittel 5a, 5b, 5c, 5d, welche als Ventile ausgebildet sind, ist abwechselnd eine Enthärtersäule 1, 2 mit der Zuleitung 3 verbindbar, während die andere Enthärtersäule 2, 1 von der Zuleitung 3 abkoppelbar ist.

Der Enthärtersäule 1 sind zwei Ventile 5a, 5b zugeordnet. Der Enthärtersäule 2 sind zwei Ventile 5c, 5d zugeordnet. Immer dann, wenn die Ventile 5a, 5b geöffnet sind, sind die Ventile 5c und 5d geschlossen. Wenn die Ventile 5c und 5d geöffnet sind, sind die Ventile 5a und 5b geschlossen, sodass eine abwechselnde Durchströmung der Enthärtersäulen 1 und 2 mit zu enthärtendem Rohwasser gewährleistet ist.

Hierzu weist die Vorrichtung eine Steuerung 5 auf, durch welche zudem der Erschöpfungsgrad der Wasserbehandlungsmittel in jeder Enthärtersäule 1, 2 erfasst wird. Die Steuerung verbindet die Zuleitung 3 in Abhängigkeit vom Erschöpfungsgrad der Wasserbehandlungsmittel entweder mit der ersten oder mit der zweiten Enthärtersäule 1, 2 derart, dass die Wasserbehandlungsmittel abwechselnd beider Enthärtersäulen 1, 2 allmählich erschöpft werden.

Die Steuerung 5 weist einen Durchflussmesser 6 auf, der der Erfassung der Durchflussmengen V_{H2O}, V_{H2Ogesamt} an Rohwasser dient. Die Steuerung 5 weist des Weiteren eine nicht gezeigte Zeiterfassungseinrichtung auf, die verschiedene Zeitintervalle ermitteln kann. Die Steuerung 5 weist auch eine nicht gezeigte Recheneinheit auf, die aus den mit dem Durchflussmesser 6 erfassten Durchflussmengen V_{H2O}, V_{H2Ogesamt} und den erfassten Zeitintervallen verschiedene Betriebsparameter errechnen und speichern kann.

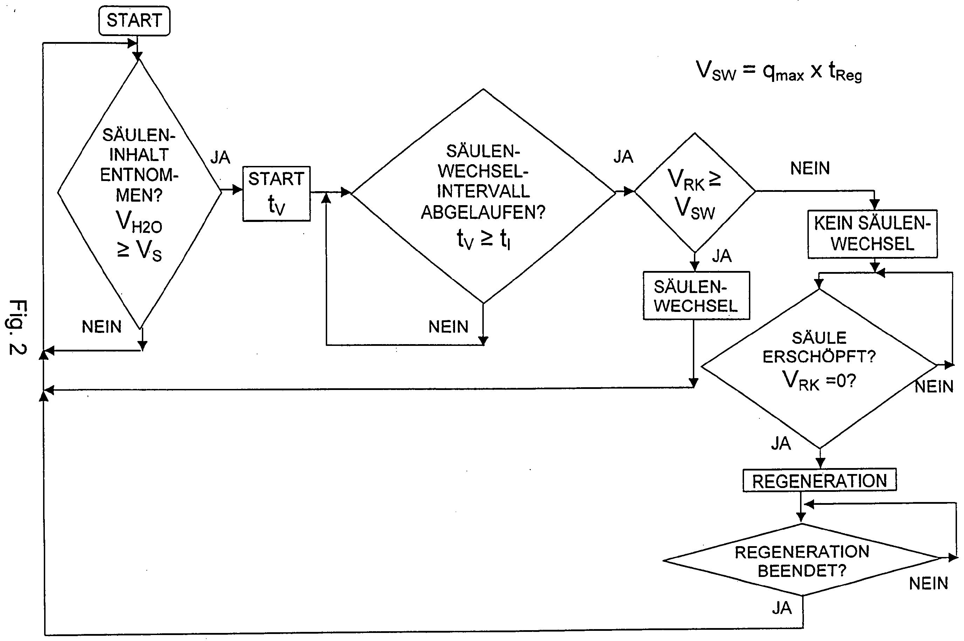

Zur Erläuterung der Wirkungsweise der erfindungsgemäßen Vorrichtung wird auf das in Fig. 2 dargestellte Diagramm Bezug genommen. Das in Fig. 2 dargestellte Diagramm beschreibt ganz konkret ein Verfahren zum Betreiben einer Vorrichtung, die der Wasserenthärtung dient.

Das Verfahren erlaubt folgende Betriebsweise:
Nach einem Startvorgang wird die durch eine erste Enthärtersäule 1 geflossene Rohwassermenge V_{H2O} erfasst. Danach wird verglichen, ob die Rohwassermenge V_{H2O} größer als das Enthärtersäulenvolumen Vs der Enthärtersäule 1 ist. Wenn dies nicht der Fall ist, bleibt die Enthärtersäule 1 in Betrieb. Dabei wird unter dem Enthärtersäulenvolumen Vs die in der mit dem Wasserbehandlungsmittel gefüllten Enthärtersäule aufnehmbare Wassermenge verstanden. Sobald jedoch die Durchflussmenge V_{H2O} durch die mit der Zuleitung 3 verbundene Enthärtersäule 1 größer als das vorgegebene Volumen Vs der Enthärtersäule 1 ist, wird die Zeiterfassungseinrichtung aktiviert und misst ein erstes Zeitintervall tᵥ und vergleicht dieses mit einem vorgegebenen Enthärtersäulenwechselintervall t₁. Typischerweise beträgt dieses Zeitintervall t₁ eine Stunde, kann aber auch auf einen Wert zwischen 0,25 Stunden und 96 Stunden eingestellt sein. Das Enthärtersäulenvolumen Vs kann z.B. 5 Liter betragen.

Während der Messdauer tv bis zum Ablauf des ersten vorgebbaren Zeitintervalls t₁ erfasst der Durchflussmesser 6 weiter die Durchflussmenge V_{H2Ogesamt} durch die in Betrieb befindliche Enthärtersäule 1. Sobald tᵥ das vorgegebene Zeitintervall t₁ erreicht, wird ermittelt, ob ein Enthärtersäulenwechsel sinnvoll ist. Hierzu wird von einem automatisch ermittelten oder manuell einstellbaren Kapazitätsvolumen V_{K} der Enthärtersäule 1 die gesamte seit der letzten Regeneration durch die Enthärtersäule 1 geflossene Durchflussmenge V_{H2Ogesamt} subtrahiert. Das Ergebnis dieser Subtraktion ist ein Restkapazitätsvolumen V_{RK}. Sofern das Restkapazitätsvolumen V_{RK} größer oder gleich einem Enthärtersäulenwechselvolumen Vsw ist, findet ein Enthärtersäulenwechsel statt. Die Steuerung 5 koppelt hierzu die Zuleitung 3 von der ersten Enthärtersäule 1 ab und verbindet die Zuleitung 3 mit der zweiten Enthärtersäule 2.

Das Enthärtersäulenwechselvolumen Vsw wird aus der maximalen Durchflussrate qₘₐₓ mit der Einheit 1/h und der Regenerationszeit t_{Reg} ermittelt, indem diese Größen multipliziert werden. Die maximale Durchflussrate qₘₐₓ wird von der Zeiterfassungseinrichtung innerhalb eines zweiten vorgebbaren Zeitintervalls von typischerweise 24 Stunden anhand des Durchflussmessers 6 ermittelt, um die Intensität der Benutzung der Vorrichtung zu ermitteln. Nach Ablauf des zweiten Zeitintervalls wird der Wert für qₘₐₓ gelöscht und die Bestimmung der maximalen Durchflussrate beginnt erneut. Auf diese Weise ist sichergestellt, dass eine Enthärtersäule auch bei wechselnden Verbräuchen stets eine ausreichende Kapazität hat, um während der Regeneration der anderen Enthärtersäule die Wasserbehandlung zu garantieren.

Wenn jedoch das Restkapazitätsvolumen V_{RK} der Enthärtersäule 1 kleiner als das Enthärtersäulenwechselvolumen Vsw ist, findet zunächst kein Enthärtersäulenwechsel statt. In einer weiteren Routine wird dann geprüft, ob die Enthärtersäule 1 vollständig erschöpft ist, nämlich das Restkapazitätsvolumen V_{RK} gleich null ist. Das Restkapazitätsvolumen V_{RK} ist dann gleich null, wenn die Differenz zwischen dem Kapazitätsvolumen V_{K} und der gesamten seit der letzten Regeneration durch die Enthärtersäule 1 geflossene Durchflussmenge V_{H2Ogesamt} gleich null ist.

Um festzustellen, ob die Enthärtersäule 1 vollständig erschöpft ist, wird die gesamte Durchflussmenge V_{H2Ogesamt} durch die Enthärtersäule 1 (seit der letzten Regeneration) ermittelt.

Wenn das Restkapazitätsvolumen V_{RK} der Enthärtersäule 1 gleich null ist, wird in jedem Fall eine Regeneration der Enthärtersäule 1 eingeleitet, wobei zwangsweise auf die zweite Enthärtersäule 2 gewechselt wird. Die Steuerung 5 verbindet dann die Zuleitung 3 mit der zweiten Enthärtersäule 2.

Erst wenn die Regeneration der Enthärtersäule 1 beendet ist, wird erneut jede Durchflussmenge V_{H2O}, V_{H2Ogesamt} durch die Enthärtersäule 1 ermittelt.

Wenn das Restkapazitätsvolumen V_{RK} der Enthärtersäule 1 noch nicht gleich null ist, jedoch kleiner als das Enthärtersäulenwechselvolumen Vsw ist, findet solange kein Enthärtersäulenwechsel statt, bis die Enthärtersäule 1 vollständig erschöpft ist und deren Regeneration eingeleitet wird.

Durch das zuvor beschriebene Verfahren ist sichergestellt, dass beide Enthärtersäulen 1 und 2 allmählich und abwechselnd, aber auch vollständig erschöpft werden. Die erfindungsgemäße Vorrichtung erlaubt die Durchführung des zuvor beschriebenen Verfahrens. Jedes konstruktive Merkmal der in der Beschreibung und den Patentansprüchen beschriebenen Vorrichtung dient der Durchführung eines Verfahrensschritts.

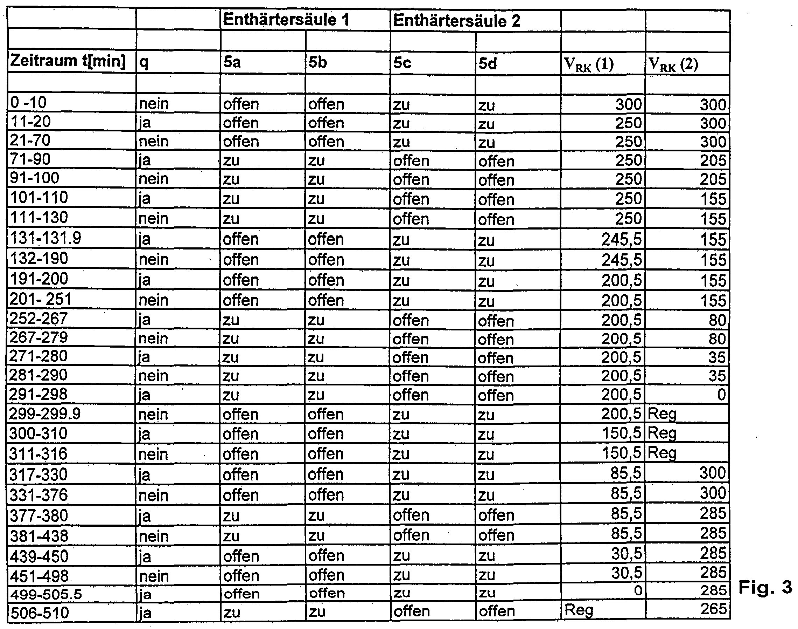

Fig. 3 zeigt eine Tabelle, in der Betriebsparameter der erfindungsgemäßen Vorrichtung dargestellt sind. In der linken Spalte sind Zeitintervalle angegeben, während derer die Durchflussmengen V_{H2O}, V_{H2Ogesamt} durch die Enthärtersäulen 1 und 2 erfasst werden. In der zweiten Spalte ist angegeben, ob Wasser aus der Vorrichtung entnommen wird, nämlich ob ein Durchfluss q stattfindet. Die Spalten 3 bis 6 zeigen den Status der Ventile 5a, 5b, 5c, 5d und geben an, ob eine Enthärtersäule an die Zuleitung 3 angekoppelt ist. Wenn die Ventile 5a, 5b, 5c, 5d geöffnet sind, ist eine Enthärtersäule mit der Zuleitung 3 verbunden. Die Spalten 7 und 8 zeigen anhand von Volumina den Erschöpfungsgrad der Enthärtersäulen 1 und 2. In dem hier dargestellten Beispiel weist jede Enthärtersäule ein Enthärtersäulenvolumen Vs von 5 Litern auf. Die Regenerationszeit t_{Reg} wird mit 0,2833 Stunden festgelegt (17 Minuten), wobei das Enthärtersäulenwechselvolumen Vsw 85 Liter beträgt. Das Enthärtersäulenwechselvolumen Vsw errechnet sich aus dem Produkt der maximalen Durchflussrate qₘₐₓ von 300 Litern pro Stunde und der Regenerationszeit t_{Reg} von 0,2833 Stunden. Das Kapazitätsvolumen V_{K} jeder Enthärtersäule 1, 2 wird mit 300 Litern angesetzt. Demnach ist eine Enthärtersäule 1, 2, welche vollständig regeneriert ist, nach Durchlauf von 300 Litern Rohwasser erneut zu regenerieren.

Mit der Zeiterfassungseinrichtung werden die in Spalte 1 angegebenen Zeiten erfasst. Nachfolgend wird das zuvor anhand des Diagramms beschriebene Verfahren anhand der Tabelle gemäß Fig. 3 erläutert:
Im Zeitintervall 0 bis 10 min findet kein Durchfluss durch die Enthärtersäule 1, welche geöffnet ist, statt. Im Intervall 11 bis 20 min fließt durch die an die Zuleitung 3 angeschlossene Enthärtersäule 1 ein Volumen V_{H2O}, welches größer ist als das Enthärtersäulenvolumen Vs. Es fließen 50 Liter durch die Enthärtersäule 1. Diese Durchflussmenge V_{H2O} aktiviert die Zeiterfassungseinrichtung, welche nun das erste vorgebbare Zeitintervall t₁ von 60 min misst. Nach Ablauf des ersten vorgebbaren Zeitintervalls t₁ von 60 min im Zeitintervall 21 bis 70 min wird überprüft, ob das Restkapazitätsvolumen V_{RK} größer oder gleich dem Enthärtersäulenwechselvolumen Vsw ist. Das Restkapazitätsvolumen V_{RK} beträgt 250 Liter und ist damit größer als 85 Liter. Daher findet ein Enthärtersäulenwechsel statt, in dem die Ventile 5a, 5b geschlossen werden und die Ventile 5c und 5d geöffnet werden, um die Enthärtersäule 2 an die Zuleitung 3 anzukoppeln.

Im Zeitintervall 71 bis 90 min findet ein Durchfluss von 95 Litern statt. Diese Durchflussmenge V_{H2O} aktiviert erneut die Zeiterfassungseinrichtung, sodass diese das erste vorgebbare Zeitintervall t₁ von 60 min misst. Nach Ablauf der 60 min im Zeitintervall 111 bis 130 min wird überprüft, ob das Restkapazitätsvolumen V_{RK} der Enthärtersäule 2 größer als das Enthärtersäulenwechselvolumen Vsw ist. Der Tabelle entnimmt man, dass das Restkapazitätsvolumen V_{RK} 155 Liter beträgt, also größer als 85 Liter ist. Insoweit findet nun ein Enthärtersäulenwechsel auf die Enthärtersäule 1 statt. In den Zeitintervallen 131 bis 190 min wird lediglich eine Durchflussmenge V_{H2O} von 0,5 Liter festgestellt. Diese Durchflussmenge V_{H2O} ist geringer als das Enthärtersäulenvolumen Vs, nämlich geringer als 5 Liter. Daher wird die Zeiterfassungseinrichtung nicht aktiviert, das erste vorgebbare Zeitintervall t₁ von 60 min zu messen. Es findet auch kein Enthärtersäulenwechsel statt. Erst im Zeitintervall 191 bis 200 min wird eine Durchflussmenge V_{H2O} entnommen, die größer als das Enthärtersäulenvolumen Vs ist. Konkret werden 45 Liter entnommen, sodass die erste Zeiterfassungseinrichtung aktiviert wird. Nach 60 min wird erneut geprüft, ob das Restkapazitätsvolumen V_{RK} der ersten Enthärtersäule 1 größer als das Enthärtersäulenwechselvolumen Vsw ist. Da dies der Fall ist, findet ein Wechsel der Enthärtersäulen statt.

Die Zeiterfassungseinrichtung beginnt im Zeitintervall 252 bis 267 min das erste vorgebbare Zeitintervall t₁ von 60 min abzuzählen, da erneut der Wert von Vs überschritten wurde. Im Zeitintervall 291 bis 298 min wird festgestellt, dass die Enthärtersäule 2 vollständig erschöpft ist, nämlich dass deren Restkapazitätsvolumen V_{RK} gleich null ist. Es findet nun ein Enthärtersäulenwechsel auf die Enthärtersäule 1 statt und die Regeneration der Enthärtersäule 2 wird eingeleitet. Obwohl das erste vorgebbare Zeitintervall von 60 min noch nicht abgelaufen ist, findet zwangsweise ein Enthärtersäulenwechsel statt, da die Enthärtersäule 2 vollständig erschöpft ist. Man erkennt, dass die Regeneration der Enthärtersäule 2 nach 17 min abgeschlossen ist. Im Zeitintervall 299 bis 376 min ist die erste Enthärtersäule 1 geöffnet. Im Zeitintervall 331 bis 376 min wird überprüft, ob das Restkapazitätsvolumen V_{RK} der Enthärtersäule 1 größer oder gleich dem Enthärtersäulenwechselvolumen Vsw ist. Da dies der Fall ist, findet ein Enthärtersäulenwechsel auf die Enthärtersäule 2 statt. Nach erneutem Wechsel auf Enthärtersäule 1 im Zeitintervall 439 bis 450 min aktiviert eine Durchflussmenge V_{H2O} von 55 Litern die Zeiterfassungseinrichtung zum Messen des ersten vorgebbaren Zeitintervalls t₁ von 60 min. Im Zeitintervall 499 bis 505,5 min wird festgestellt, dass die erste Enthärtersäule 1 vollständig erschöpft ist. Es findet nun ein Enthärtersäulenwechsel auf Enthärtersäule 2 statt, wobei die vollständig erschöpfte Enthärtersäule 1 regeneriert wird.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

## Patentansprüche

1. Vorrichtung zur Enthärtung von Rohwasser, umfassend mindestens eine erste und eine zweite Enthärtersäule (1, 2), welche ein sich erschöpfendes und regenerierbares Wasserbehandlungsmittel enthalten, eine Zuleitung (3) zur Einleitung von Rohwasser in die Enthärtersäulen (1, 2) und eine Ableitung (4) zur Ableitung von Weichwasser aus den Enthärtersäulen (1, 2), wobei abwechselnd eine Enthärtersäule (1,2) mit der Zuleitung (3) über Stellmittel (5a, 5b, 5c, 5d) verbindbar ist, während die andere Enthärtersäule (2, 1) von der Zuleitung (3) durch die Stellmittel (5a, 5b, 5c, 5d) abkoppelbar ist, wobei eine Steuerung (5) vorgesehen ist, welche den Erschöpfungsgrad der Wasserbehandlungsmittel in jeder Enthärtersäule (1, 2) erfasst und die Zuleitung (3) in Abhängigkeit vom Erschöpfungsgrad entweder mit der ersten oder mit der zweiten Enthärtersäule (1, 2) derart verbindet, dass die Wasserbehandlungsmittel abwechselnd allmählich erschöpft werden, wobei die Steuerung (5) ausschließlich einen Durchflussmesser (6) zur Erfassung von Durchflussmengen (V_{H2O}, V_{H2Ogesamt}) an Rohwasser und mindestens eine Zeiterfassungseinrichtung aufweist, **dadurch gekennzeichnet, dass** die Zeiterfassungseinrichtung eine Zeit tv bis zum Ablauf eines ersten vorgebbaren Zeitintervalls t₁ misst, wobei die Messung durch eine Durchflussmenge V_{H2O} durch die mit der Zuleitung (3) verbundene Enthärtersäule (1, 2) aktiviert wird, und dass die Steuerung (5) nach Ablauf des ersten vorgebbaren Zeitintervalls t₁ die Zuleitung (3) von einer Enthärtersäule (1, 2) abkoppelt und mit der anderen verbindet, sofern das Restkapazitätsvolumen V_{RK} der momentan in Betrieb befindlichen Enthärtersäule (1, 2) größer oder gleich einem Enthärtersäulenwechselvolumen Vsw ist.

2. Vorrichtung nach Anspruch 1, **dadurch gekennzeichnet, dass** die Zeiterfassungseinrichtung durch eine Durchflussmenge V_{H2O} aktiviert wird, die größer oder gleich dem Volumen Vs der Enthärtersäule (1, 2) ist.

3. Vorrichtung nach Anspruch 1 oder 2, **dadurch gekennzeichnet, dass** die Steuerung (5) die gesamten Durchflussmengen V_{H2Ogesamt} an Rohwasser für jede der beiden Enthärtersäulen (1, 2) erfasst, die seit der letzten Regeneration der jeweiligen Enthärtersäule (1, 2) durch diese geflossen sind.

4. Vorrichtung nach einem der Ansprüche 1 bis 3, **dadurch gekennzeichnet, dass** die Steuerung (5) die maximale Durchflussrate qₘₐₓ an Rohwasser durch beide Enthärtersäulen (1, 2) innerhalb eines zweiten vorgebbaren Zeitintervalls erfasst.

5. Vorrichtung nach einem der Ansprüche 1 bis 4, **dadurch gekennzeichnet, dass** die Steuerung (5) als Maß für den Erschöpfungsgrad des Wasserbehandlungsmittels ein Restkapazitätsvolumen V_{RK} ermittelt, wobei dieses durch Subtraktion der gesamten seit deren letzter Regeneration durch eine Enthärtersäule (1, 2) geflossenen Durchflussmenge V_{H2Ogesamt} von einem vorgebbaren Kapazitätsvolumen V_{K} der Enthärtersäule (1, 2) erhalten wird.

6. Vorrichtung nach Anspruch 4 oder 5, **dadurch gekennzeichnet, dass** die Steuerung (5) das Enthärtersäulenwechselvolumen Vsw aus dem Produkt einer Regenerationszeit t_{Reg} für das Wasserbehandlungsmittel und der maximalen Durchflussrate qₘₐₓ ermittelt.

7. Vorrichtung nach einem der Ansprüche 1 bis 6, **dadurch gekennzeichnet**, das die Steuerung (5) die Zuleitung (3) von einer ersten Enthärtersäule (1, 2) abkoppelt und mit der zweiten verbindet, wenn das Restkapazitätsvolumen V_{RK} gleich null ist.

8. Vorrichtung nach Anspruch 7, **dadurch gekennzeichnet, dass** die Steuerung (5) die Regeneration des Wasserbehandlungsmittels der ersten Enthärtersäule (1, 2) einleitet, wenn deren Restkapazitätsvolumen V_{RK} gleich null ist.

9. Vorrichtung nach Anspruch 8, **dadurch gekennzeichnet, dass** die Steuerung (5) die Zuleitung (3) mit der ersten Enthärtersäule (1, 2) verbindet, wenn deren Regeneration abgeschlossen ist.

10. Vorrichtung nach einem der Ansprüche 1 bis 9, **dadurch gekennzeichnet, dass** die Enthärtersäulen (1, 2) als Wasserbehandlungsmittel ein Ionenaustauscherharz umfassen.

11. Verfahren zur Enthärtung von Rohwasser unter Verwendung einer Vorrichtung nach einem der voranstehenden Ansprüche, bei dem mindestens eine erste und eine zweite Enthärtersäule (1, 2) vorgesehen sind, welche ein sich erschöpfendes und regenerierbares Wasserbehandlungsmittel enthalten, wobei Rohwasser durch eine Zuleitung (3) in die Enthärtersäulen (1, 2) eingeleitet und Weichwasser durch eine Ableitung (4) aus den Enthärtersäulen (1, 2) abgeleitet wird, wobei abwechselnd eine Enthärtersäule (1, 2) mit der Zuleitung (3) über Stellmittel (5a, 5b, 5c, 5d) verbunden wird, während die andere Enthärtersäule (2, 1) von der Zuleitung (3) durch die Stellmittel (5a, 5b, 5c, 5d) abgekoppelt wird, **dadurch gekennzeichnet, dass** der Erschöpfungsgrad der Wasserbehandlungsmittel in jeder Enthärtersäule (1, 2) erfasst oder ermittelt wird und die Zuleitung (3) in Abhängigkeit vom Erschöpfungsgrad entweder mit der ersten oder mit der zweiten Enthärtersäule (1, 2) derart verbunden wird, dass die Wasserbehandlungsmittel abwechselnd allmählich erschöpft werden.

## Claims

1. Device for softening untreated water, comprising at least one first and one second softening column (1, 2) that include an exhaustive water treatment agent that can be regenerated, a supply line (3) for introducing untreated water into the softening columns (1, 2) and a discharging line (4) for discharging soft water out of the softening columns (1, 2), wherein in an alternating manner one softening column (1, 2) can be connected to the supply line (3) by way of adjusting means (5a, 5b, 5c, 5d), while the other softening column (2, 1) can be decoupled from the supply line (3) by means of the adjusting means (5a, 5b, 5c, 5d), wherein a controller (5) is provided that ascertains the extent of exhaustion of the water treatment agent in each softening column (1, 2) and connects the supply line (3) either to the first or the second softening column (1, 2) in dependence upon the extent of exhaustion in such a manner that the water treatment agents are gradually exhausted in an alternating manner, wherein the controller (5) only comprises one through-flow meter (6) for ascertaining flow rates (V_{H2O}, V_{H20total}) of untreated water and at least one time ascertaining device, **characterized in that** the time ascertaining device measures a time tv until a first predetermined time interval t₁ elapses, wherein the measurement is activated by means of a flow rate V_{H2O} through the softening column (1, 2) that is connected to the supply line (3), and that after a first predeterminable time interval t₁ has elapsed the controller (5) decouples the supply line (3) from one softening column (1, 2) and connects said supply line to the other softening column if the residual capacity volume V_{RK} of the softening column (1, 2) that is currently in operation is greater than or equal to a softening column alternating volume Vsw.

2. Device according to Claim 1, **characterized in that** the time ascertaining device is activated by means of a flow rate V_{H2O} that is greater than or equal to the volume V_{S} of the softening column (1, 2).

3. Device according to Claim 1 or 2, **characterized in that** the controller (5) ascertains the total flow rates V_{H20total} of untreated water for each of the two softening columns (1, 2) that since the last regeneration of the respective softening column (1,2) have flowed through said softening column (1, 2).

4. Device according to any one of the claims 1 to 3, **characterized in that** the controller (5) ascertains the maximum through-flow rate qₘₐₓ of untreated water through the two softening columns (1, 2) within a second predeterminable time interval.

5. Device according to any one of the claims 1 to 4, **characterized in that** the controller (5) determines a residual capacity volume V_{RK} as a measurement for the extent of exhaustion of the water treatment agent, wherein said residual capacity volume is obtained by means of subtracting the total flow rate V_{H20total} that has flowed through a softening column (1, 2) since the last regeneration of said softening column from a predetermined capacity volume V_{K} of the softening column (1, 2).

6. Device according to Claim 4 or 5, **characterized in that** the controller (5) determines the softening column alternating volume Vsw from the product of a regeneration time t_{Reg} for the water treatment agent and the maximum through-flow rate qₘₐₓ.

7. Device according to any one of the claims 1 to 6, **characterized in that** the controller (5) decouples the supply line (3) from a first softening column (1, 2) and connects said supply line to the second softening column if the residual capacity volume V_{RK} is equal to zero.

8. Device according to Claim 7, **characterized in that** the controller (5) initiates the regeneration of the water treatment agent of the first softening column (1, 2) if the residual capacity volume V_{RK} of said first softening column is equal to zero.

9. Device according to Claim 8, **characterized in that** the controller (5) connects the supply line (3) to the first softening column (1, 2) if the regeneration of said first softening column has been completed.

10. Device according to any one of the claims 1 to 9, **characterized in that** the softening columns (1, 2) comprise an ion exchange resin as a water treatment agent.

11. Method for softening untreated water when using a device according to any one of the preceding claims, in which at least one first and one second softening column (1, 2) are provided that comprise an exhaustive water treatment agent that can be regenerated, wherein untreated water is introduced through a supply line (3) into the softening columns (1, 2) and soft water is discharged through a discharging line (4) out of the softening columns (1, 2), wherein in an alternating manner one softening column (1, 2) is connected to the supply line (3) by way of adjusting means (5a, 5b, 5c, 5d), while the other softening column (2, 1) is decoupled from the supply line (3) by means of the adjusting means (5a, 5b, 5c, 5d), **characterized in that** the extent of exhaustion of the water treatment agent is ascertained or determined in each softening column (1, 2) and the supply line (3) is connected either to the first or to the second softening column (1, 2) in dependence upon the extent of exhaustion in such a manner that the water treatment agents are gradually exhausted in an alternating manner.

## Revendications

1. Dispositif d'adoucissement d'eau non traitée, comprenant au moins une première et une seconde colonne d'adoucissement (1, 2), qui contiennent un agent de traitement d'eau s'épuisant et pouvant être régénéré, une conduite d'amenée (3) pour introduire de l'eau non traitée dans les colonnes d'adoucissement (1, 2) et une conduite d'évacuation (4) pour évacuer de l'eau adoucie des colonnes d'adoucissement (1, 2), dans lequel, en alternance, une colonne d'adoucissement (1, 2) peut être reliée à la conduite d'amenée (3) par le biais de moyens de commande (5a, 5b, 5c, 5d), tandis que l'autre colonne d'adoucissement (2, 1) peut être séparée de la conduite d'amenée (3) par les moyens de commande (5a, 5b, 5c, 5d), dans lequel une commande (5) est prévue, qui détecte le degré d'épuisement des agents de traitement d'eau dans chaque colonne d'adoucissement (1, 2) et qui relie la conduite d'amenée (3) soit à la première soit à la seconde colonne d'adoucissement (1, 2) en fonction du degré d'épuisement de telle manière que les agents de traitement d'eau sont épuisés progressivement en alternance, dans lequel la commande (5) comporte uniquement un débitmètre (6) destiné à détecter des débits (V_{H2O}, V_{H2Ototal}) d'eau non traitée et au moins un moyen de chronométrage, **caractérisé en ce que** le moyen de chronométrage mesure une durée tv jusqu'à écoulement d'un premier intervalle de temps configurable t₁, la mesure étant activée par un débit V_{H2O} à travers la colonne d'adoucissement (1, 2) reliée à la conduite d'amenée (3), et **en ce que** la commande (5) sépare la conduite d'amenée (3) d'une colonne d'adoucissement (1, 2) après écoulement du premier intervalle de temps configurable t₁ et la relie à l'autre, dans la mesure où le volume de capacité résiduelle V_{RK} de la colonne d'adoucissement (1, 2) se trouvant actuellement en fonctionnement est supérieur ou égal à un volume de changement de colonne d'adoucissement Vsw.

2. Dispositif selon la revendication 1, **caractérisé en ce que** le moyen de chronométrage est activé par un débit V_{H2O} qui est supérieur ou égal au volume Vs de la colonne d'adoucissement (1,2).

3. Dispositif selon la revendication 1 ou 2, **caractérisé en ce que** la commande (5) détecte les débits totaux V_{H2Ototal} d'eau non traitée pour chacune des deux colonnes d'adoucissement (1, 2) qui se sont écoulés à travers la colonne d'adoucissement (1, 2) respective depuis la dernière régénération de celle-ci.

4. Dispositif selon l'une des revendications 1 à 3, **caractérisé en ce que** la commande (5) détecte le débit volumétrique maximal qₘₐₓ d'eau non traitée à travers les deux colonnes d'adoucissement (1, 2) pendant un second intervalle de temps configurable.

5. Dispositif selon l'une des revendications 1 à 4, **caractérisé en ce que** la commande (5) détermine un volume de capacité résiduelle V_{RK} comme mesure du degré d'épuisement de l'agent de traitement d'eau, celui-ci étant obtenu par la soustraction du débit total V_{H2Ototal} s'étant écoulé à travers une colonne d'adoucissement (1, 2) depuis sa dernière régénération d'un volume de capacité V_{K} configurable de la colonne d'adoucissement (1, 2).

6. Dispositif selon la revendication 4 ou 5, **caractérisé en ce que** la commande (5) détermine le volume de changement de colonne d'adoucissement Vsw à partir du produit d'une durée de régénération t_{Reg} pour l'agent de traitement d'eau et du débit volumétrique maximal qₘₐₓ.

7. Dispositif selon l'une des revendications 1 à 6, **caractérisé en ce que** la commande (5) sépare la conduite d'amenée (3) d'une première colonne d'adoucissement (1, 2) et la relie à la seconde, lorsque le volume de capacité résiduelle V_{RK} est égal à zéro.

8. Dispositif selon la revendication 7, **caractérisé en ce que** la commande (5) déclenche la régénération de l'agent de traitement d'eau de la première colonne d'adoucissement (1, 2) lorsque son volume de capacité résiduelle V_{RK} est égal à zéro.

9. Dispositif selon la revendication 8, **caractérisé en ce que** la commande (5) relie la conduite d'amenée (3) à la première colonne d'adoucissement (1, 2) lorsque sa régénération est terminée.

10. Dispositif selon l'une des revendications 1 à 9, **caractérisé en ce que** les colonnes d'adoucissement (1, 2) comprennent une résine échangeuse d'ions comme agent de traitement d'eau.

11. Procédé d'adoucissement d'eau non traitée au moyen d'un dispositif selon l'une des revendications précédentes, selon lequel au moins une première et une seconde colonne d'adoucissement (1, 2) sont prévues, qui contiennent un agent de traitement d'eau s'épuisant et pouvant être régénéré, de l'eau non traitée étant introduite par une conduite d'amenée (3) dans les colonnes d'adoucissement (1, 2) et de l'eau adoucie étant évacuée des colonnes d'adoucissement (1, 2) par une conduite d'évacuation (4), dans lequel, en alternance, une colonne d'adoucissement (1, 2) est reliée à la conduite d'amenée (3) par le biais de moyens de commande (5a, 5b, 5c, 5d), tandis que l'autre colonne d'adoucissement (2, 1) est séparée de la conduite d'amenée (3) par les moyens de commande (5a, 5b, 5c, 5d), **caractérisé en ce que** le degré d'épuisement des agents de traitement d'eau est détecté ou déterminé dans chaque colonne d'adoucissement (1, 2) et la conduite d'amenée (3) est reliée soit à la première soit à la seconde colonne d'adoucissement (1, 2) en fonction du degré d'épuisement de telle manière que les agents de traitement d'eau sont épuisés progressivement en alternance.
